# EUROPÄISCHE PATENTSCHRIFT

(11) **EP 3 336 294 B1**
(45) Veröffentlichungstag und Bekanntmachung des Hinweises auf die Patenterteilung: **25.12.2019**
(21) Anmeldenummer: 17205073.4
(22) Anmeldetag: 04.12.2017
(51) Int. Cl.: E05F 15/635, F16G 3/00, F16G 3/07, F16G 1/28

(54) **VORRICHTUNG ZUR BETÄTIGUNG EINER SCHIEBETÜR**
DEVICE AND ACTUATION OF A SLIDING DOOR
DISPOSITIF D'ACTIONNEMENT D'UNE PORTE COULISSANTE

(30) Priorität: 16.12.2016 AT 511462016
(43) Veröffentlichungstag der Anmeldung: 20.06.2018
(73) Patentinhaber: Liberda, Victor, 1010 Wien (AT); Liberda, Rudolf, 1090 Wien (AT)
(72) Erfinder: Liberda, Victor, 1010 Wien (AT); Liberda, Rudolf, 1090 Wien (AT)
(74) Vertreter: Patentanwaltskanzlei Matschnig & Forsthuber OG

(56) Entgegenhaltungen:
- EP-A2- 0 543 523
- WO-A1-90/12185
- JP-U- S6 182 153

## Beschreibung

Die Erfindung betrifft eine Vorrichtung zur Betätigung einer Schiebetür mit einem Türblatt, wobei diese Vorrichtung zur Montage am Rahmen der Türe oder an einer Wand oder Decke vorgesehen ist, umfassend eine Antriebsvorrichtung mit einem Antriebszahnrad, ein Umlenkrad und einen Zahnriemen, der im montierten Zustand über das Antriebszahnrad und das Umlenkrad geführt ist, wobei der Zahnriemen eine Vielzahl von vorzugsweise normal zur Umfangsrichtung orientierten Zähnen, sowie zwei Enden, aufweist, wobei die Türbetätigungsvorrichtung ferner eine Verbindungsvorrichtung umfasst, an der der Zahnriemen an einer Position längs des Zahnriemens, das heißt an dessen longitudinaler Erstreckung, mit einer am Türblatt gelegenen Verriegelungskomponente verbindbar ist und die Verbindungsvorrichtung ein Grundelement und ein Verbindungselement umfasst. Das Grundelement ist im Wesentlichen durch eine Platte mit einer Unterseite und einer Oberseite (die Unterseite ist der Oberseite abgewandt) gebildet. Auf der Oberseite sind vorzugsweise an zwei gegenüberliegenden Enden des Grundelements zwei Auflageflächen zur Auflage der zwei Enden des Zahnriemens vorgesehen. Jede Auflagefläche ist jeweils zur Aufnahme jener Seite des Zahnriemens vorgesehen, die der Seite mit den Zähnen abgewandt ist. Das Verbindungselement ist im Wesentlichen durch eine Platte mit einer Unterseite und einer Oberseite (die Unterseite ist der Oberseite abgewandt) gebildet, wobei auf der Unterseite Zähne ausgebildet sind, die dafür vorgesehen sind, in die Zähne des Zahnriemens zu greifen. Das Verbindungselement ist dazu eingerichtet ist, mit seinen Zähnen auf die komplementär gelegenen Zähne der beiden Enden, des Zahnriemens zu drücken und dadurch eine feste Verbindung der beiden Enden des Zahnriemens herzustellen.

Automatisch öffnende und schließende Schiebetüren finden heute vielfach für Türen und Fenster gleichermaßen Anwendung, wie beispielsweise in Wohn- oder Geschäftsgebäuden, aber auch für Hallen werden häufig Schiebetore eingesetzt. Dabei steht nicht nur der Komfort des automatischen Öffnens und Schließens, sondern auch der praktische Nutzen im Vordergrund. So können automatische Schiebetüren beispielsweise als Personenzutrittsbeschränkung zu Räumen oder Bereichen, auch als Raumtrennung zwischen Räumen mit unterschiedlichen klimatischen Bedingungen, wie unterschiedliche Temperatur, Luftfeuchtigkeit oder Helligkeit, sowie Lärm, aber auch als automatische Beschattungselemente bei Sonneneinstrahlung, als automatische Beschränkung von Zugluft oder als Sichtschutz fungieren. Schiebetüren und Schiebeläden für Fenster oder Türen können beispielsweise aus Glas, Metall, Kunststoff, Verbundwerkstoff oder Holz hergestellt sein, aber auch aus Textilien, die auf einen Rahmen gespannt oder ein einfacher Vorhang sind, oder in verschiedenen Materialkombinationen.

Eine elektrische Steuerung für eine automatisch öffnende und schließende Schiebetür kann beispielsweise zumindest einen Sensor, der herannahende Personen oder Fahrzeuge detektieren kann, oder einen Umgebungssensor zur Erfassung von Temperatur, Luftfeuchtigkeit, Helligkeit, Lärm oder Wind, umfassen. Die elektrische Steuerung kann den Sensor verwenden, um eine elektrische Antriebsvorrichtung, bei Bedarf auch unter Verwendung eines mechanischen Getriebes, anzusteuern.

Türbetätigungsvorrichtungen für Schiebetüren nach dem Stand der Technik weisen häufig geometrisch große Komponenten insbesondere für die Antriebsvorrichtung und den Öffnungsmechanismus auf. Neben der schwierigen Montage, die durch das hohe Eigengewicht hervorgerufen werden kann, können diese großen Komponenten auch unästhetisch für den Betrachter wirken. Dies ist insbesondere für die Anwendung im Privatbereich, aber auch bei repräsentativen Räumen ein sehr wichtiger Gesichtspunkt bei der Auswahl entsprechender Komponenten.

Die EP 0543523 A2, die JP H02103547 U, die WO 9012185 A1, die JP S6182153 U sowie die US 2001049908 A1 zeigen jeweils eine Vorrichtung zur Betätigung einer Schiebetür mit einem Türblatt, wobei die Betätigungseinheit zur Montage am Rahmen der Türe oder an einer Wand oder Decke vorgesehen ist.

Neben den Aspekten betreffend Montage und Ästhetik muss eine Türbetätigungsvorrichtung auch weitere funktionale Merkmale aufweisen. Dazu zählen beispielsweise sicherheitsrelevante Merkmale, denn Schiebetüren sollen in Notfallsituationen einfach zu entriegeln sein.

Zusätzlich sind häufig betriebliche Eigenschaften wichtig, wie beispielsweise ein rasches und geräuscharmes Öffnen und Schließen der Schiebetür. Statische und dynamische Belastungen durch den Betrieb beeinflussen die Konstruktion einer Türbetätigungsvorrichtung für eine Schiebetür, denn das Türblatt kann je nach Anwendung sehr unterschiedlich im Gewicht sein. Demzufolge sollte eine Türbetätigungsvorrichtung für verschiedenste Türblätter variabel einsetzbar, adaptierbar und wartungsarm sein.

Schiebetüren beziehungsweise Türbetätigungsvorrichtungen nach dem Stand der Technik weisen häufig eine große Bauform auf und sind kompliziert in der Montage, sowie erfüllen nicht immer alle der zuvor genannten funktionalen Anforderungen.

Es ist Aufgabe der vorliegenden Erfindung, die genannten Nachteile zu überwinden und den Anforderungen an Türbetätigungsvorrichtungen gerecht zu werden.

Die erfindungsgemäße Aufgabe wird durch eine Türbetätigungsvorrichtung der eingangs genannten Art gelöst, wobei die Verbindungsvorrichtung ferner ein Adapterelement umfasst, das im Wesentlichen durch eine Platte mit einer Unterseite und einer Oberseite (die Unterseite ist der Oberseite abgewandt) gebildet ist, wobei auf der Oberseite Zähne ausgebildet sind, die dafür vorgesehen sind, in die Zähne des Verbindungselements zu greifen; das Grundelement weist auf der Oberseite zwischen den beiden Auflageflächen, eine Adapterfläche zur Aufnahme (der Unterseite) des Adapterelements auf. Durch Einsatz des Adapterelements wird eine weitere Verbesserung erzielt, da die Vorrichtung noch flexibler für unterschiedliche Stärken des Zahnriemens einsetzbar ist und die Türbetätigungsvorrichtung an verschiedene Belastungen, beispielsweise durch Türblätter mit unterschiedlichem Gewicht oder Größe, besonders einfach angepasst werden kann. Folglich können für ein und dieselbe Türbetätigungsvorrichtung unterschiedliche Adapterelemente beziehungsweise Zahnriemen für unterschiedliche mechanische Lasten vorgesehen werden, während viele andere Elemente der Vorrichtung baugleich eingesetzt werden können.

Durch die erfindungsgemäße Vorrichtung kann erreicht werden, dass auf eine besonders einfache Art und Weise ein Türblatt über einen Zahnriemen mit einer montageseitig, also wand- oder deckenseitig, gelegenen Antriebsvorrichtung beispielsweise automatisch betätigt werden kann. Zudem erlaubt die Vorrichtung eine besonders platzsparende und kompakte Ausführung, sodass insbesondere eine schmale Bauform der Türbetätigungsvorrichtung erzielt werden kann. Ferner kann eine hohe mechanische Belastbarkeit der Türbetätigungsvorrichtung erreicht werden und die Türbetätigungsvorrichtung an unterschiedliche Türblätter, insbesondere mit unterschiedlichem Gewicht, mit einfachen Mitteln angepasst werden.

Es ist dabei besonders bevorzugt, wenn das Verbindungselement im zusammengebauten Zustand seine Zähne auf die komplementär gelegenen Zähne der beiden Enden des Zahnriemens und die Zähne des Adapterelements drückt und dadurch eine feste Verbindung der beiden Enden des Zahnriemens herstellt. Dadurch kann erreicht werden, dass die Verbindung der beiden Enden des Zahnriemens und die Anbindung an das Türblatt besonders fest und mechanisch sehr hoch belastbar ist, da die Verbindung durch die große Oberfläche der beteiligten Zähne des Zahnriemens und des Adapterelements, sowie des Verbindungselements in sehr hohem Maße form- und kraftschlüssig ist.

In einer Weiterbildung der Erfindung umfasst die Türbetätigungsvorrichtung ferner eine Abdeckung, die eingerichtet ist, auf die Oberseite des Verbindungselements eine Anpresskraft auszuüben, beziehungsweise mittels der eine Anpresskraft erzeugbar ist, um das Verbindungselement, das Adapterelement und das Grundelement miteinander fest zu verbinden, bevorzugt durch Schrauben, Stifte, Bolzen oder Niete. Diese Vorrichtung zeichnet sich durch eine formschöne Verbindung aus, die eine sehr kleine, schlanke und kompakte Bau- beziehungsweise Außenform erreichen kann, sowie gleichzeitig die wichtigen Elemente der Türbetätigungsvorrichtung mechanisch stabil und einfach miteinander verbindet.

Es ist günstig, wenn das Verbindungselement eine Länge aufweist, die länger ist, vorzugsweise zumindest dreimal so lang ist, als die Länge des Adapterelements. Außerdem ist es besonders günstig, wenn das Adapterelement eine Länge aufweist, die zumindest so lang ist, dass zumindest fünf Zähne, vorzugsweise zumindest zehn Zähne, umfasst sind. Zusätzlich ist es vorteilhaft, wenn die Auflageflächen des Grundelements etwa so lang sind, wie das Adapterelement. Durch eine solche Bemessung der Länge des Adapterelements, des Verbindungselements und/ oder der Auflageflächen des Grundelements wird eine besonders hohe mechanische Belastbarkeit der Türbetätigungsvorrichtung erreicht.

Es ist besonders vorteilhaft, wenn das Verbindungselement, das Adapterelement und das Grundelement jeweils gleich breit sind, und vorzugsweise gleich breit wie der Zahnriemen. Durch eine solche Bemessung in der Breite der genannten Komponenten wird eine besonders hohe mechanische Belastbarkeit der Türbetätigungsvorrichtung erreicht, indem die Verbindung in sehr hohem Maße form- und kraftschlüssig sein kann.

In einer Weiterbildung der Erfindung ist die Verbindungsvorrichtung über eine Verbindungsstange vorzugsweise gelenkig mit der am Türblatt gelegenen Verriegelungskomponente verbindbar und die Verbindungsstange vorzugsweise zumindest 20 cm lang. Durch die Verbindungsstange wird erreicht, dass etwaige Unebenheiten oder ein Durchhang der montageseitig gelegenen Elemente, wie beispielsweise eine Zimmerdecke oder eine Mauer, ausgeglichen werden können, da der Verfahrweg des Türblatts und jener der Türbetätigungsvorrichtung - in gewissem Rahmen - in der Praxis nicht exakt einander entsprechen und durch die beweglich gelagerte Verbindungsstange ausgeglichen werden können. Beispielsweise lassen einschlägige Baunormen bis zu einem bestimmten Grad einen Durchhang der Decke zu, oder es ist für Wände ein bestimmtes Maß an Unebenheit zulässig. Diese Parameter können bei der praktischen Ausführung durch die erfindungsgemäße Vorrichtung ausgeglichen werden, indem der Verfahrweg des Türblattes, der montageseitig diesen Unebenheiten folgt, und der Verfahrweg der Türbetätigungsvorrichtung, der durch die Lage des Zahnriemens oder einer Laufschiene bestimmt ist, durch eine gelenkig verbundene Verbindungsstange aufgenommen wird und in eine seitliche Bewegung umgesetzt wird. Eine einfache Form für eine gelenkige Verbindung der Verbindungsstange ist eine Gelenksachse oder ein Zapfen, die beziehungsweise der quer zum Verfahrweg des Türblattes angeordnet ist.

Alternativ kann das Grundelement direkt mit der Verriegelungskomponente verbunden sein. Dabei kann ein Langloch, das senkrecht zur Bewegungsrichtung der Türe gelegen ist, vorgesehen sein, in das beispielsweise ein Verbindungsbolzen eingreift, um das Grundelement mit der Verriegelungskomponente senkrecht zur Bewegungsrichtung der Türe beweglich zu verbinden. Es ist dabei nicht relevant, ob das Langloch beziehungsweise der Verbindungsbolzen seitens dem Grundelement oder der Verriegelungskomponente gelegen ist, wodurch die Anordnung vereinfacht wird.

In einer weiteren alternativen Ausführung kann die Verbindung zwischen dem Grundelement und der Verriegelungskomponente starr ausgeführt sein und der Zahnriemen senkrecht zur Bewegungsrichtung beweglich geführt sein, was die Komplexität der Anordnung verringert.

In einer weiteren Ausführungsform der Erfindung umfasst die Verriegelungskomponente eine Notentriegelung, die durch einen lösbaren Zapfen oder Verriegelungsbolzen der Verbindung zwischen der Verbindungsstange und der Verriegelungskomponente beziehungsweise zwischen dem Grundelement und der Verriegelungskomponente gelöst werden kann. Um in Notsituationen das Türblatt rasch und einfach von der Türbetätigungsvorrichtung trennen zu können, ist es vorgesehen, die gelenkige Verbindung zwischen der Verbindungsvorrichtung und dem Türblatt in Form eines lösbaren Zapfens aus der Vorrichtung zu lösen. Insbesondere die Wahl dieser Trennstelle erlaubt eine besonders einfache und kostengünstige Ausführung einer Türnotentriegelung, da ein Zapfen sehr einfach gelöst werden kann und durch die Verwendung des Zapfens als Verbindungselement für die beweglich gelagerte Verbindungsstange besonders geeignet ist. In einer speziellen Ausführungsform kann der Zapfen beispielsweise durch den vorher genannten Verbindungsbolzen gebildet sein.

Grundsätzlich ist es günstig, wenn das Grundelement eine Länge aufweist, die im Wesentlichen gleich lang ist, wie das Verbindungselement. Durch eine solche Bemessung der Länge des Grundelements wird eine besonders hohe mechanische Belastbarkeit der Türbetätigungsvorrichtung erreicht, da die Verbindung in sehr hohem Maße form- und kraftschlüssig sein kann.

Überdies ist es vorteilhaft, wenn die Zähne des Zahnriemens auf der innenliegenden Oberfläche des Zahnriemens angeordnet sind, was insbesondere einen einfachen Aufbau unterstützt, da die Spannung eines Zahnriemens durch die Geometrie der Anordnung, insbesondere des Antriebszahnrads und der Umlenkrads, eingestellt werden kann und folglich die Montage vereinfacht. Mit der innenliegenden Oberfläche des Zahnriemens ist die Fläche oder Seite des Zahnriemens gemeint, die an die umschlossene Fläche grenzt, die durch einen in sich geschlossenen Zahnriemen gebildet ist. Mit anderen Worten ist die innenliegende Oberfläche jene Seite, die der vom Zahnriemen umschlossenen Fläche zugewandt ist.

Außerdem ist es besonders vorteilhaft, wenn der Zahnriemen ringartig in sich verbunden werden kann beziehungsweise im montierten Zustand ringartig in sich verbunden ist, wodurch eine besonders einfache, baugrößen-reduzierende und kostengünstige Ausgestaltung des Zahnriemens unterstützt wird beziehungsweise auf eine weitere Anbindung von den weiteren Enden des Zahnriemens verzichtet werden kann. Mit anderen Worten kann es in der Praxis auch erforderlich sein, dass ein Zahnriemen zweiteilig ausgeführt ist und jeweils beide Enden der Zahnriemen befestigt werden müssen, was durch bestimmte Anforderungen an die Schiebetür gefordert sein kann und zu einem höheren Aufwand hinsichtlich der Befestigung führen kann.

Die Erfindung und deren Vorteile werden im Folgenden anhand von nicht einschränkenden Ausführungsbeispielen näher beschrieben, die in den beiliegenden Zeichnungen veranschaulicht sind. Die Zeichnungen zeigen in
- Fig. 1a: eine Vorderansicht einer Schiebetür mit einer erfindungsgemäßen ersten Ausführungsform einer Türbetätigungsvorrichtung,
- Fig. 1b: eine Seitenansicht der Schiebetür nach Fig. 1a,
- Fig. 1c: eine vergrößerte Vorderansicht der Schiebetür nach Fig. 1a im Detail A,
- Fig. 2: eine perspektivische Explosions-Ansicht der Türbetätigungsvorrichtung,
- Fig. 3: eine perspektivische Explosions-Ansicht einer erfindungsgemäßen Verbindungsvorrichtung,
- Fig. 4: eine perspektivische Ansicht eines erfindungsgemäßen Grundelements und eines erfindungsgemäßen Adapterelements,
- Fig. 5: eine perspektivische Explosions-Ansicht einer zweiten Ausführungsform einer Türbetätigungsvorrichtung.

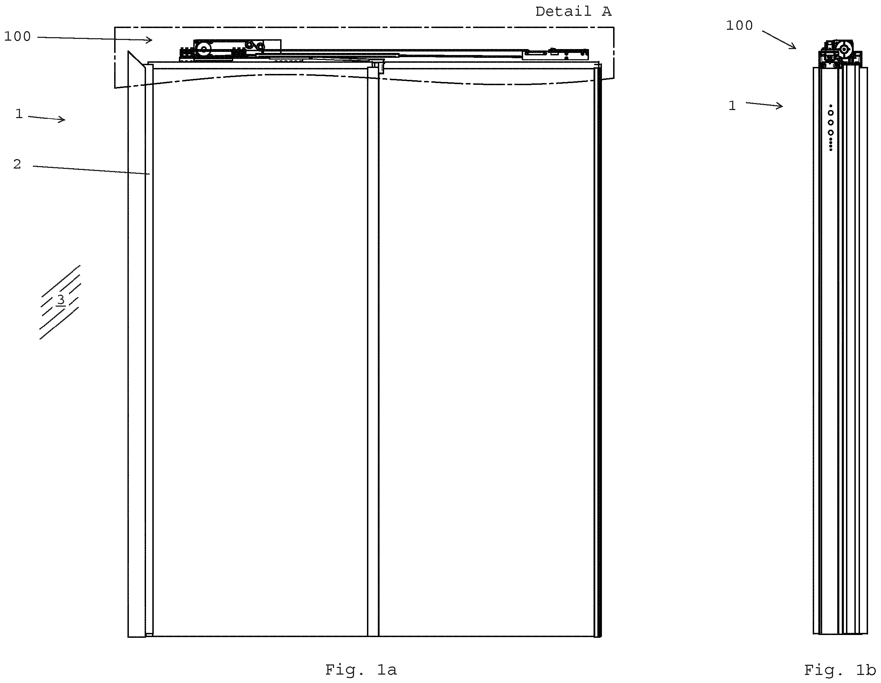

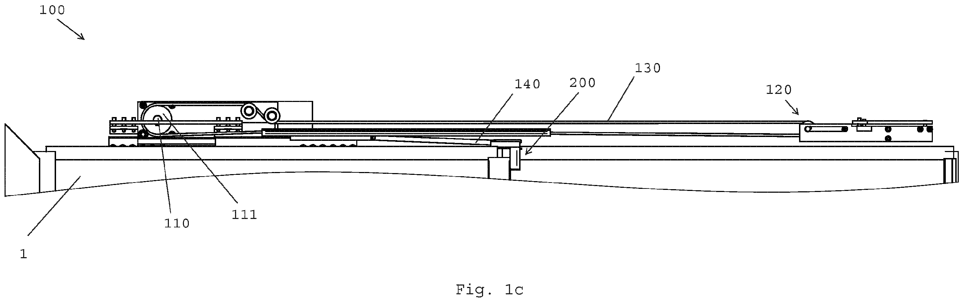

Unter Bezugnahme auf **Fig. 1** bis **Fig. 5** werden nun Ausführungsbeispiele der Erfindung näher erläutert. Insbesondere sind für die Erfindung bei einer Schiebetür wichtige Teile dargestellt, wobei klar ist, dass eine Türbetätigungsvorrichtung für eine Schiebetür noch viele andere, nicht gezeigte Teile enthält, die einen sinnvollen Einsatz bei einer Schiebetür selbst ermöglichen. Der Übersichtlichkeit halber sind daher beispielsweise die Ansteuerungselektronik, weitere mechanische Elemente beziehungsweise Halterungen der Tür nicht gezeigt.

**Fig. 1a, 1b** **und** **1c** zeigen eine Schiebetür 1 mit einem Türblatt 2, die an einer Wand 3 montiert ist und eine erfindungsgemäße Türbetätigungsvorrichtung 100 aufweist. Die Türbetätigungsvorrichtung 100 weist eine Antriebsvorrichtung 110 auf, die ebenfalls an der Wand 3 oder am Türrahmen montiert ist und ein Antriebszahnrad 111 antreibt. Ferner ist an der Wand 3 ein Umlenkrad 120 vorgesehen. In Fig. 1a ist die Schiebetür 1 im geschlossenen Zustand gezeigt, in dem das Türblatt 2 die Öffnung der Tür verschließt. Fig. 1a zeigt überdies einen Bereich für ein Detail A, das in Fig. 1c vergrößert dargestellt ist.

Ein Zahnriemen 130, der ringartig in sich verbunden ist, weist eine Vielzahl von normal zur Umfangsrichtung orientierten Zähnen auf und wird über das Antriebszahnrad 111 und das Umlenkrad 120 geführt. Ferner ist eine Verbindungsstange 140 sowie eine Verriegelungskomponente 200 erkennbar.

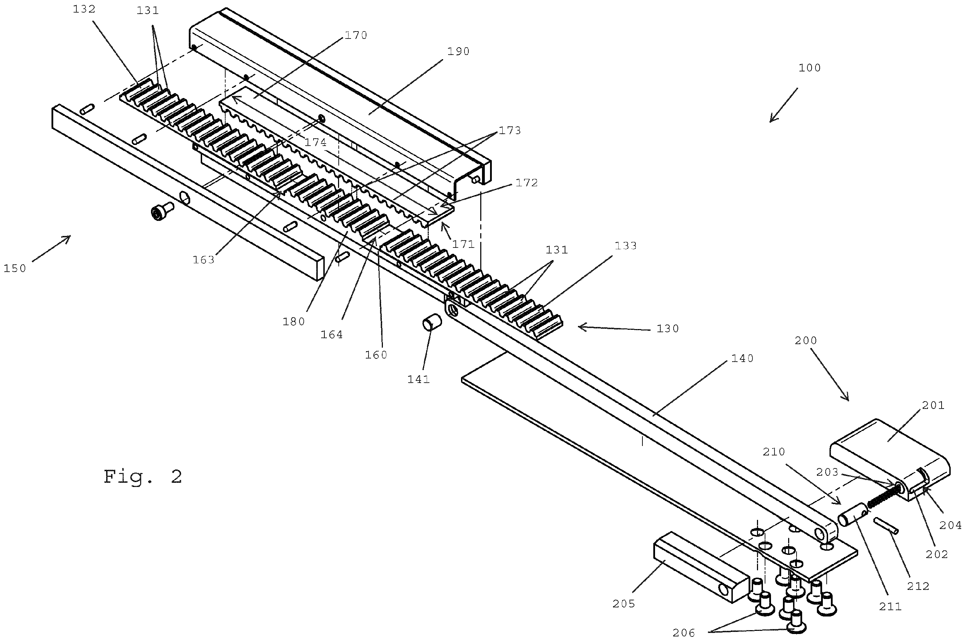

In **Fig. 2** ist der detaillierte Aufbau der Türbetätigungsvorrichtung 100 dargestellt. Die Türbetätigungsvorrichtung 100 umfasst eine Verbindungsvorrichtung 150, mithilfe deren der Zahnriemen 130 an seinen beiden Enden 132, 133 mit einer am Türblatt 2 angeordneten Verriegelungskomponente 200 verbunden ist. Die Verbindungsvorrichtung 150 umfasst ein Grundelement 160 und ein Verbindungselement 170.

Das Grundelement 160 ist im Wesentlichen durch eine Platte mit einer Unterseite 161 und einer Oberseite 162 gebildet, wobei die Unterseite 161 der Oberseite 162 abgewandt ist. Die Oberseite 162 weist an zwei gegenüberliegenden Enden des Grundelements 160 je eine Auflagefläche 163, 164 zur Auflage je eines der zwei Enden 132,133 des Zahnriemens 130 auf. Jede Auflagefläche 163, 164 ist jeweils zur Aufnahme jener Seite des Zahnriemens 130 vorgesehen, die der Seite mit dem Zähnen abgewandt ist. Die beiden Oberflächen der Auflagefläche 163, 164 und des Zahnriemens 130, die gegenseitig bei Auflage des Riemens auf die vorgesehenen Auflageflächen 163, 164 in Kontakt kommen, können jeweils eine glatte beziehungsweise flache Oberfläche aufweisen. Alternativ können diese beiden Oberflächen eine Oberflächenstruktur aufweisen, wobei es günstig ist, wenn sie zueinander komplementär geformte Oberflächen aufweisen.

Das Verbindungselement 170 ist im Wesentlichen durch eine Platte mit einer Unterseite 171 und einer Oberseite 172 gebildet, wobei die Unterseite 171 der Oberseite 172 abgewandt ist. Auf der Unterseite 171 sind Zähne 173 ausgebildet, die komplementär zu den Zähnen des Zahnriemens gestaltet und dafür vorgesehen sind, in die Zähne 131 des Zahnriemens 130 zu greifen.

Dabei ist es nicht entscheidend, ob die genannten Platten des Grundelement 160 beziehungsweise des Verbindungselements 170 tatsächlich die Form einer Platte aufweisen. Das jeweilige Element kann durchaus auch aus einer Seite eines T-förmigen oder rechteckigen Trägers gebildet sein, wodurch insgesamt eine höhere mechanische Belastbarkeit des Elements 160, 170 erzielt werden kann. Das Verbindungselement 170 kann in Varianten der gezeigten Ausführungsform zusätzlich zu anderen Funktionen genützt werden und folglich auch andere Formelemente aufweisen, wie Bohrungen, Aussparungen, Aufnahmen für beispielsweise Befestigungselemente. So wird das Grundelement 160 im gezeigten Ausführungsbeispiel aus einem T-förmigen Träger gebildet, dessen Oberseite 162 eine Platte bildet.

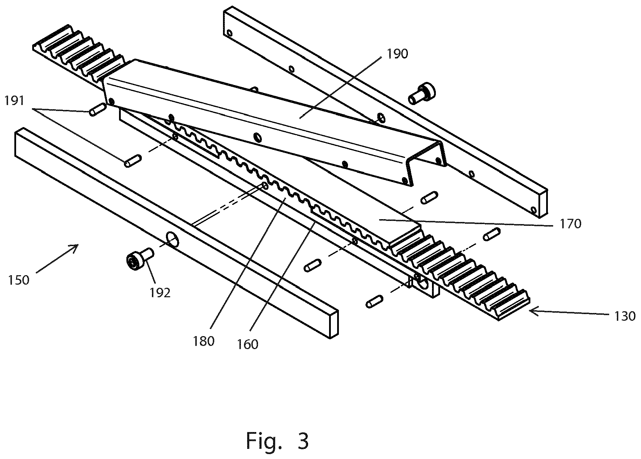

Bezugnehmend auf Fig. 3 ist das Verbindungselement 170 dazu eingerichtet, mit seinen Zähnen 173 auf die komplementär gelegenen Zähne 131 der beiden Enden 132, 133 des Zahnriemens 130 zu drücken und dadurch eine feste Verbindung der beiden Enden 132,133 des Zahnriemens 130 herzustellen.

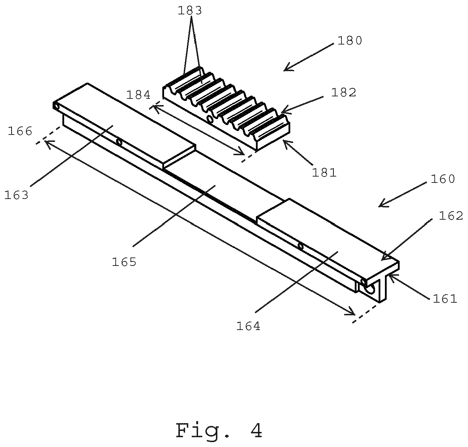

Wie auch aus der Fig. 4 hervorgeht, beinhaltet die Verbindungsvorrichtung 150 ferner ein Adapterelement 180, das im Wesentlichen durch eine Platte mit einer Unterseite 181 und einer Oberseite 182 gebildet ist, wobei die Unterseite 181 der Oberseite 182 abgewandt ist und auf der Oberseite 182 Zähne 183 ausgebildet sind, die dafür vorgesehen sind, in die Zähne 173 des Verbindungselements 170 zu greifen. Auf der Oberseite 162 des Grundelements 160 ist zwischen den beiden Auflageflächen 163,164 eine Adapterfläche 165 zur Aufnahme der Unterseite 181 des Adapterelements 180 vorgesehen.

Bei Verwendung eines Adapterelements 180 kann es vorgesehen sein, dass das Verbindungselement 170 eingerichtet ist, dessen Zähne 173 auf die komplementär gelegenen Zähne 131 der beiden Enden 132, 133 des Zahnriemens 130 und die Zähne 183 des Adapterelements 180 zu drücken und dadurch eine feste Verbindung der beiden Enden 132, 133 des Zahnriemens 130 herzustellen.

Das Verbindungselement 170 weist in diesem Ausführungsbeispiel eine Länge 174 (Fig. 2) auf, die etwa dreimal so lang ist, wie die Länge 184 (Fig. 4) des Adapterelements 180. Das Adapterelement 180 weist in diesem Ausführungsbeispiel eine Länge 184 auf, die so gewählt ist, dass beispielsweise neun Zähne gehalten sind. Das Grundelement 160 weist diesem Ausführungsbeispiel eine Länge 166 auf, die im Wesentlichen gleich lang ist wie das Verbindungselement 170. Die Auflageflächen 163, 164 des Grundelements 160 sind in diesem Ausführungsbeispiel etwa so lang, wie das Adapterelement 180. Das Verbindungselement 170, das Adapterelement 180 und das Grundelement 160 sind in diesem Ausführungsbeispiel jeweils gleich breit, sowie gleich breit wie der Zahnriemen 130. Grundsätzlich sind andere Abmessungen auch anwendbar, wobei die Anzahl der Zähne beziehungsweise die Länge 184 des Adapterelements 180 auch die Festigkeit der Verbindung zwischen der Verbindungsvorrichtung 150 und dem Zahnriemens 130 festlegt.

Die Verbindungsvorrichtung 150 ist über eine Verbindungsstange 140 vorzugsweise gelenkig mit der am Türblatt 2 gelegenen Verriegelungskomponente 200 verbunden, wobei die Verbindungsstange 140 in diesem Ausführungsbeispiel zumindest 20 cm lang ist.

Zusätzlich umfasst die Verriegelungskomponente 200 eine Notentriegelung 210, die durch einen lösbaren Zapfen der Verbindung zwischen der Verbindungsstange 140 und der Verriegelungskomponente 200 ausgelöst werden kann. Der lösbare Zapfen ist durch einen Verriegelungsbolzen 211 und einen Verriegelungshebel 212 gebildet, wobei der Verriegelungshebel 212 quer zum Verriegelungsbolzen 211 angebracht ist. Die gelenkige Verbindung der Verbindungsstange 140 ist somit durch einen Verbindungszapfen 141 sowie durch den Verriegelungsbolzen 211 realisiert.

Der Verriegelungsbolzen 211 ist in ein Loch 203 in einem Verriegelungselements 201 eingesetzt und wird durch eine Feder 202, die zwischen dem Verriegelungsbolzen 211 und das Loch 203 des Verriegelungselements 201 eingesetzt ist, in Richtung der Längsachse des Lochs 203 beziehungsweise des Verriegelungsbolzens 211 in Spannung gehalten.

Der Verriegelungsbolzen 211 ist mit dem Verriegelungshebel 212 längs der Achse des Verriegelungsbolzen 211 beweglich und ragt in einer verriegelten Position des Verriegelungsbolzens 211 aus dem Loch 203 eines Verriegelungselements 201 so weit heraus, dass der Verriegelungsbolzen 211 durch ein entsprechendes Loch in der Verbindungsstange 140 hindurch ragt und optional durch ein weiteres Loch in einem Abschlusselement 205 der Verriegelungskomponente 200 gesteckt werden kann. In einer entriegelten Position ragt der Verriegelungsbolzen 211 nicht aus dem Loch 203 heraus. Der Wechsel zwischen der verriegelten und der entriegelten Position des Verriegelungsbolzens 211 erfolgt durch manuelle Betätigung des Verriegelungshebels 212, der in einer Hebelführung 204 geführt ist, wobei ein Teil der Hebelführung 204 quer zur Längsachse des Verriegelungsbolzens 211 orientiert ist, um den Verriegelungshebel 212 in jener Endposition arretieren zu können, in der die Feder 202 in einer ersten Endlage unter einer Spannung steht, also der entriegelten Position. Die Hebelführung 204 weist ferner eine Endposition in Längsachse des Verriegelungsbolzens 211 auf, um den Verriegelungshebel 212 in einer zweiten Endlage, also der verriegelten Position arretieren zu können. Folglich ist der Verriegelungshebel 212 nur zwischen der ersten und der zweiten Endlage bewegbar, das heißt zwischen der entriegelten und der verriegelten Position.

Durch mehrere Montageelemente 206, beispielsweise Schrauben oder Niete, wird das Türblatt 2, möglicherweise mittels weiterer Befestigungsmittel, fest mit der Verriegelungskomponente 200 verbunden.

In einem nicht dargestellten, alternativen Ausführungsbeispiel kann das Grundelement direkt mit der Verriegelungskomponente 200 verbunden sein. Dabei kann ein Langloch, das senkrecht zur Bewegungsrichtung der Türe gelegen ist, vorgesehen sein, in das beispielsweise ein Verbindungsbolzen eingreift, um das Grundelement mit der Verriegelungskomponente 200 senkrecht zur Bewegungsrichtung der Türe beweglich zu verbinden. Es ist dabei nicht relevant, ob das Langloch beziehungsweise der Verbindungsbolzen seitens dem Grundelement oder der Verriegelungskomponente 200 gelegen ist, wodurch die Anordnung vereinfacht wird. Es kann der Verriegelungsbolzen 211 in eine entsprechende Öffnung, ähnlich zu der, die zur Aufnahme des Verbindungszapfens 141 im Grundelement 160 vorgesehen ist, die jedoch als Langloch konzipiert ist, im Grundelement eingeführt werden.

In einem weiteren nicht dargestellten, alternativen Ausführungsbeispiel kann die Verbindung zwischen dem Grundelement und der Verriegelungskomponente 200 starr ausgeführt sein und der Zahnriemen senkrecht zur Bewegungsrichtung beweglich geführt sein, was die Komplexität der Anordnung verringert.

**Fig. 3** zeigt eine Abdeckung 190, die dazu dient, auf die Oberseite 172 des Verbindungselements 170 eine Anpresskraft auszuüben und das Verbindungselement 170, das Adapterelement 180 und das Grundelement 160 miteinander fest zu verbinden, wobei die Verbindung durch Schrauben, Stifte, Bolzen oder Niete erfolgen kann; wie in diesem Ausführungsbeispiel durch Montagestifte 191 und Montageschrauben 192.

**Fig. 4** zeigt im Detail das Grundelement 160 und das Adapterelement 180. Es ist erkennbar, dass die Stärke des Adapterelements von der Stärke des Zahnriemens 130 abhängt und ein entsprechend gewählter Adapter für eine in sehr hohem Maße form- und kraftschlüssige Verbindung sorgt. Für verschiedene Stärken von Zahnriemen sind also verschiedene Adapter vorgesehen. Auch die Länge des Adapterelements 180 und die Länge der Auflageflächen 163,164 und der Adapterfläche 165 auf dem Grundelement 160 können an die jeweiligen Anforderungen der Türbetätigungsvorrichtung 100 angepasst werden.

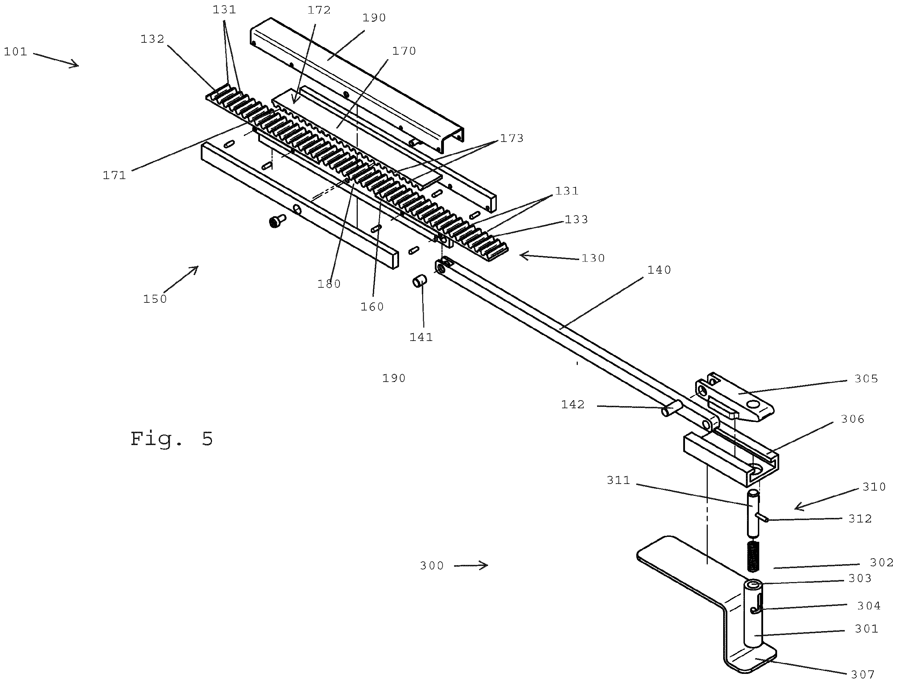

**Fig. 5** stellt ein weiteres Ausführungsbeispiel einer Türbetätigungsvorrichtung 101 mit einer Verriegelungskomponente 300 dar, die eine Notentriegelung 310 umfasst.

Die Verriegelungskomponente 300 unterscheidet sich von der Verriegelungskomponente 200 im vorhergehenden Ausführungsbeispiel dahingehend, dass die Betätigung der Notentriegelung 310 in vertikaler Richtung erfolgt, was in manchen Anwendungen gewünscht ist, insbesondere wenn diesbezügliche Einbauvorschriften oder Gestaltungswünsche vorliegen. Die Funktion der Verriegelungskomponente 300 entspricht grundsätzlich jener der Verriegelungskomponente 200. Die gelenkige Verbindung ist durch die Verbindungszapfen 141 und 142 realisiert.

Die Verriegelungskomponente 300 umfasst eine Notentriegelung 310, die durch einen lösbaren Zapfen der Verbindung zwischen der Verbindungsstange 140 und der Verriegelungskomponente 300 betätigt werden kann. Der lösbare Zapfen ist durch einen Verriegelungsbolzen 311 und einen Verriegelungshebel 312 gebildet, wobei der Verriegelungshebel 312 quer, in diesem Ausführungsbeispiel horizontal orientiert, zum Verriegelungsbolzen 311 angebracht ist.

Der Verriegelungsbolzen 311 ist in ein Loch 303 in einem Verriegelungselement 301 eingesetzt und wird durch eine Feder 302, die zwischen dem Verriegelungsbolzen 311 und das Loch 303 des Verriegelungselements 301 eingesetzt ist, in Richtung der Längsachse des Lochs 303 beziehungsweise des Verriegelungsbolzens 311 in Spannung gehalten.

Der Verriegelungsbolzen 311 ist mit dem Verriegelungshebel 312 längs der Achse des Verriegelungsbolzen 311 beweglich und ragt in einer verriegelten Position des Verriegelungsbolzens 311 aus dem Loch 303 eines Verriegelungselements 301 so weit heraus, dass der Verriegelungsbolzen 311 durch ein weiteres Loch in einem Abschlusselement 305 der Verriegelungskomponente 300 gesteckt werden kann. In einer entriegelten Position ragt der Verriegelungsbolzen 311 nicht aus dem Loch 303 heraus.

Ein Wechsel zwischen der verriegelten und der entriegelten Position des Verriegelungsbolzens 311 erfolgt durch manuelle Betätigung des Verriegelungshebels 312, der in einer Hebelführung 304 geführt ist, wobei ein Teil der Hebelführung 304 quer zur Längsachse des Verriegelungsbolzens 311 orientiert ist, um den Verriegelungshebel 312 in jener Endposition arretieren zu können, in der die Feder 302 in einer ersten Endlage unter einer Spannung steht, also der entriegelten Position. Die Hebelführung 304 weist ferner eine Endposition in Längsachse des Verriegelungsbolzens 311 auf, um den Verriegelungshebel 312 in einer zweiten Endlage, also der verriegelten Position arretieren zu können. Folglich ist der Verriegelungshebel 312 nur zwischen der ersten und der zweiten Endlage bewegbar, das heißt zwischen der entriegelten und der verriegelten Position.

Das Verriegelungselement 301 ist zusätzlich durch Türblatt-Montageelemente 306 und 307 definiert, die miteinander fixiert werden und dazu dienen die Verriegelungskomponente 300 fest an der Schiebetür 1 zu befestigen. Das Türblatt-Montageelement 306 weist ein Loch auf, durch das der Verriegelungsbolzens 311 geführt werden kann. Weitere notwendige Montageteile wie Schrauben sind zur besseren Übersichtlichkeit nicht dargestellt. Die Verbindungsmöglichkeiten zum Türblatt 2 erschließen sich dem Fachmann.

Es versteht sich, dass die genannten Elemente je nach den mechanischen und funktionellen Anforderungen an eine Türbetätigungsvorrichtung unterschiedlich gestaltet sein können und beispielsweise Verstärkungen, aber auch Ausnehmungen im Material oder grundsätzlich aus verschiedenen Materialien gestaltet sein können. Demzufolge können durch die erfindungsgemäße Anordnung Schiebetüren beispielsweise aus Glas, Metall oder Holz, aber auch aus Textilien betätigt werden.

Als Materialien für einzelne Elemente einer erfindungsgemäßen Türbetätigungsvorrichtung kommen sowohl Metalle, insbesondere Aluminium, Stahl oder Edelstahl, aber auch Kunststoffe, insbesondere Faserverbundmaterialien wie Glasfaser oder Kohlefaser in Frage.

Der Zahnriemen kann beispielsweise aus Kunststoff oder in speziellen Fällen sogar einem elastischen Material wie Gummi gefertigt sein, wobei zur Erhöhung der mechanischen Belastungsgrenze beispielsweise ein Kunststoffgewebe eingearbeitet sein kann.

Als Struktur können auf dem Zahnriemen dreieckförmige oder rechteckförmige, sich periodisch wiederholende Elemente beziehungsweise Muster ausgebildet sein. Alternativ kann der Zahnriemen auch durch eine Kette gebildet sein, die eine äquivalente Wirkung erzielen kann, aber mit deutlich schwereren Lasten belasten werden kann. Mit anderen Worten umfasst der Zahnriemen im Sinne eines formschlüssigen Triebbandes eine periodische Struktur auf der Oberfläche des Riemens, die durch Erhöhungen oder Vertiefungen beziehungsweise Aussparungen oder Löcher, wie beispielsweise bei Kettengliedern gebildet sein kann. Der Zahnriemen kann beispielsweise ebenso durch kugel- oder perlenförmige Elemente, die an einem Seil angeordnet sind, gebildet sein.

Es ist klar, dass die in die Strukturelemente des Riemens eingreifenden Komponenten, wie das Antriebszahnrad oder das Umlenkrad, aber auch das Grundelement, das Verbindungselement beziehungsweise das Adapterelement entsprechend komplementär gestaltet sein müssen, um in den Riemen eingreifen zu können und um eine mechanisch feste Verbindung zu erzielen.

Eine Kette ist robust gegen eine Abnahme der Kettenspannung im Vergleich zu einem Zahnriemen, der bei fehlender Zahnriemenspannung unter Umständen durchrutschen kann, was in manchen Anwendungen gefordert sein kann, um beispielsweise die Wartung der Vorrichtung zu vereinfachen.

### Bezugszeichenliste:

- 1: Schiebetür
- 2: Türblatt
- 3: Wand
- 100, 101: Türbetätigungsvorrichtung
- 110: Antriebsvorrichtung
- 111: Antriebszahnrad
- 120: Umlenkrad
- 130: Zahnriemen
- 131: Zähne des Zahnriemens
- 132, 133: Enden des Zahnriemens
- 140: Verbindungsstange
- 141, 142: Verbindungszapfen
- 150: Verbindungsvorrichtung
- 160: Grundelement
- 161: Unterseite des Grundelements
- 162: Oberseite des Grundelements
- 163, 164: Auflageflächen des Grundelements
- 165: Adapterfläche
- 166: Länge des Grundelements
- 170: Verbindungselement
- 171: Unterseite des Verbindungselements
- 172: Oberseite des Verbindungselements
- 173: Zähne des Verbindungselements
- 174: Länge des Verbindungselements
- 180: Adapterelement
- 181: Unterseite des Adapterelements
- 182: Oberseite des Adapterelements
- 183: Zähne des Adapterelements
- 184: Länge des Adapterelements
- 190: Abdeckung
- 191: Montagestift
- 192: Montageschraube
- 200, 300: Verriegelungskomponente
- 201, 301: Verriegelungselement
- 202, 302: Feder
- 203, 303: Loch
- 204, 304: Hebelführung
- 205, 305: Abschlusselement der Verriegelungskomponente
- 206, 306, 307: Türblatt-Montageelement
- 210,310: Notentriegelung
- 211,311: Verriegelungsbolzen
- 212, 311: Verriegelungshebel

## Patentansprüche

1. Vorrichtung (100) zur Betätigung einer Schiebetür (1) mit einem Türblatt (2), wobei die Vorrichtung (100) zur Montage am Rahmen der Türe oder an einer Wand (3) oder Decke vorgesehen ist, umfassend
eine Antriebsvorrichtung (110) mit einem Antriebszahnrad (111),
ein Umlenkrad (120) und
einen Zahnriemen (130), der im montierten Zustand über das Antriebszahnrad (111) und das Umlenkrad (120) geführt ist, wobei der Zahnriemen (130) eine Vielzahl von vorzugsweise normal zur Umfangsrichtung orientierten Zähnen, sowie zwei Enden (132, 133) aufweist,
wobei die Türbetätigungsvorrichtung (100) ferner eine Verbindungsvorrichtung (150) umfasst, an der der Zahnriemen (130) an einer Position längs des Zahnriemens (130) mit einer am Türblatt (2) gelegenen Verriegelungskomponente (200, 300) verbindbar ist und
die Verbindungsvorrichtung (150) ein Grundelement (160) und ein Verbindungselement (170) umfasst, wobei
das Grundelement (160) im Wesentlichen durch eine Platte mit einer Unterseite (161) und einer Oberseite (162) gebildet ist, wobei auf der Oberseite (162) vorzugsweise an zwei gegenüberliegenden Enden des Grundelements (160) zwei Auflageflächen (163, 164) zur Auflage der zwei Enden (132, 133) des Zahnriemens (130) vorgesehen sind, wobei jede Auflagefläche (163, 164) jeweils zur Aufnahme jener Seite des Zahnriemens (130) vorgesehen ist, die der Seite mit dem Zähnen abgewandt ist, und
das Verbindungselement (170) im Wesentlichen durch eine Platte mit einer Unterseite (171) und einer Oberseite (172) gebildet ist, wobei auf der Unterseite (171) Zähne (173) ausgebildet sind, die dazu eingerichtet ist, in komplementär gelegene Zähne (131) der beiden Enden (132, 133) des Zahnriemens (130) einzugreifen,
**dadurch gekennzeichnet, dass** die Verbindungsvorrichtung (150) ferner ein Adapterelement (180) umfasst, das im Wesentlichen durch eine Platte gebildet ist, auf deren Oberseite (182) Zähne (183) ausgebildet sind, die dafür vorgesehen sind, in die Zähne (173) des Verbindungselements (170) zu greifen, und das Grundelement (160) auf der Oberseite (162) zwischen den beiden Auflageflächen (163, 164) eine Adapterfläche (165) zur Aufnahme des Adapterelements (180) aufweist.

2. Türbetätigungsvorrichtung (100) nach Anspruch 1, **dadurch gekennzeichnet, dass** die Zähne (173) des Verbindungselements (170) im zusammengebauten Zustand auf die komplementär gelegenen Zähne (131) der beiden Enden (132, 133) des Zahnriemens (130) und die Zähne (183) des Adapterelements (180) drücken und dadurch eine feste Verbindung der beiden Enden (132, 133) des Zahnriemens (130) herstellen.

3. Türbetätigungsvorrichtung (100) nach Anspruch 1 oder 2, **dadurch gekennzeichnet, dass** die Türbetätigungsvorrichtung (100) ferner eine Abdeckung (190) umfasst, mittels der auf die Oberseite (172) des Verbindungselements (170) eine Anpresskraft erzeugbar ist und das Verbindungselement (170), das Adapterelement (180) und das Grundelement (160) miteinander fest verbindbar sind.

4. Türbetätigungsvorrichtung (100) nach einem der Ansprüche 1 bis 3, **dadurch gekennzeichnet, dass** das Verbindungselement (170) eine Länge (174) aufweist, die länger ist, vorzugsweise zumindest dreimal so lang ist, als die Länge (184) des Adapterelements (180) ist.

5. Türbetätigungsvorrichtung (100) nach einem der Ansprüche 1 bis 4, **dadurch gekennzeichnet, dass** das Adapterelement (180) eine Länge (184) aufweist, die zumindest so lang ist, dass zumindest fünf Zähne, vorzugsweise zumindest zehn Zähne, umfasst sind.

6. Türbetätigungsvorrichtung (100) nach einem der Ansprüche 1 bis 5, **dadurch gekennzeichnet, dass** die Auflageflächen (163, 164) des Grundelements (160) etwa so lang sind, wie das Adapterelement (180).

7. Türbetätigungsvorrichtung (100) nach einem der Ansprüche 1 bis 6, **dadurch gekennzeichnet, dass** das Verbindungselement (170), das Adapterelement (180) und das Grundelement (160) jeweils gleich breit sind, und vorzugsweise gleich breit wie der Zahnriemen (130).

8. Türbetätigungsvorrichtung (100) nach einem der vorhergehenden Ansprüche, **dadurch gekennzeichnet, dass** die Verbindungsvorrichtung (150) über eine Verbindungsstange (140) vorzugsweise gelenkig mit der am Türblatt (2) gelegenen Verriegelungskomponente (200, 300) verbindbar ist und die Verbindungsstange (140) vorzugsweise zumindest 20 cm lang ist.

9. Türbetätigungsvorrichtung (100) nach Anspruch 8, **dadurch gekennzeichnet, dass** die Verriegelungskomponente (200, 300) eine Notentriegelung (210, 310) umfasst, die durch einen lösbaren Verriegelungsbolzen (211, 311) der Verbindung zwischen der Verbindungsstange (140) und der Verriegelungskomponente (200, 300) gelöst werden kann.

10. Türbetätigungsvorrichtung (100) nach einem der Ansprüche 1 bis 7, **dadurch gekennzeichnet, dass** die Verriegelungskomponente (200, 300) eine Notentriegelung (210, 310) umfasst, die durch einen lösbaren Verbindungsbolzen der Verbindung zwischen dem Grundelement und der Verriegelungskomponente (200, 300) gelöst werden kann.

11. Türbetätigungsvorrichtung (100) nach einem der vorhergehenden Ansprüche, **dadurch gekennzeichnet, dass** das Grundelement (160) eine Länge (166) aufweist, die im Wesentlichen gleich lang ist wie das Verbindungselement (170).

12. Türbetätigungsvorrichtung (100) nach einem der vorhergehenden Ansprüche, **dadurch gekennzeichnet, dass** die Zähne (131) des Zahnriemens (130) auf der innenliegenden Oberfläche des Zahnriemens (130) angeordnet sind.

13. Türbetätigungsvorrichtung (100) nach einem der vorhergehenden Ansprüche, **dadurch gekennzeichnet, dass** der Zahnriemen (130) im montierten Zustand in sich ringartig verbunden ist.

## Claims

1. A device (100) for actuating a sliding door (1) comprising a door leaf (2), the device (100) being provided for mounting on the frame of the doors or on a wall (3) or ceiling, comprising
a drive device (110) with a drive gear (111),
a deflection pulley (120), and
a toothed belt (130) which, when mounted, is guided via the drive gear (111) and the deflection pulley (120), the toothed belt (130) having a plurality of teeth, which are preferably oriented normally to the circumferential direction, and two ends (132, 133),
the door actuation device (100) also comprising a connection device (150) on which the toothed belt (130), at a position along the toothed belt (130), can be connected to a locking component (200, 300) situated on the door leaf (2), and
the connection device (150) comprising a base element (160) and a connection element (170),
the base element (160) being substantially formed by a plate with a lower face (161) and an upper face (162), the upper face (162) being provided with two bearing faces (163, 164), preferably at two opposite ends on the upper face (162) of the base element (160), for supporting the two ends (132, 133) of the toothed belt (130), each bearing face (163, 164) being configured to hold the side of the toothed belt (130) which faces away from the side with the teeth, and
the connection element (170) being substantially formed by a plate with a lower face (171) and an upper face (172), teeth (173) being formed on the lower face (171), which is configured to engage complementary teeth (131) of the two ends (132, 133) of the toothed belt (130),
**characterised in that**
the connection device (150) further comprises an adapter element (180) which is formed substantially by a plate, having an upper face (182) on which teeth (183) are formed, which are configured to engage the teeth (173) of the connection element (170), and the base element (160) has an adapter face (165) for receiving the adapter element (180) on the upper face (162) between the two bearing faces (163, 164).

2. The door actuation device (100) according to Claim 1, **characterised in that** the teeth (173) of the connection element (170), when in the assembled state, press on the complementary teeth (131) of the two ends (132, 133) of the toothed belt (130) and the teeth (183) of the adapter element (180) and thereby produce a secure connection of the two ends (132, 133) of the toothed belt (130).

3. The door actuation device (100) according to Claim 1 or 2, **characterised in that** the door actuation device (100) also comprises a cover (190), by means of which a pressing force can be generated on the upper face (172) of the connection element (170) and the connection element (170), the adapter element (180) and the base element (160) can be connected securely to one another.

4. The door actuation device (100) according to any one of Claims 1 to 3, **characterised in that** the connection element (170) has a length (174) which is longer, preferably at least three times longer, than the length (184) of the adapter element (180).

5. The door actuation device (100) according to any one of Claims 1 to 4, **characterised in that** the adapter element (180) has a length (184) which is at least long enough to include at least five teeth, preferably at least ten teeth.

6. The door actuation device (100) according to any one of Claims 1 to 5, **characterised in that** the bearing faces (163, 164) of the base element (160) are approximately as long as the adapter element (180).

7. The door actuation device (100) according to any one of Claims 1 to 6, **characterised in that** the connection element (170), the adapter element (180) and the base element (160) each have the same width and preferably have the same width as the toothed belt (130).

8. The door actuation device (100) according to any one of the preceding claims, **characterised in that** the connection device (150) can be connected, preferably articulated, to the locking component (200, 300) situated on the door leaf (2) via a connection rod (140), and the connection rod (140) is preferably at least 20 cm long.

9. The door actuation device (100) according to Claim 8, **characterised in that** the locking component (200, 300) comprises an emergency unlocking means (210, 310) which can be released by a releasable locking bolt (211, 311) of the connection between the connection rod (140) and the locking component (200, 300).

10. The door actuation device (100) according to any one of Claims 1 to 7, **characterised in that** the locking component (200, 300) comprises an emergency unlocking means (210, 310) which can be released by a releasable connection bolt of the connection between the base element and the locking component (200, 300).

11. The door actuation device (100) according to any one of the preceding claims, **characterised in that** the base element (160) has a length (166) which is substantially equal to that of the connection element (170).

12. The door actuation device (100) according to any one of the preceding claims, **characterised in that** the teeth (131) of the toothed belt (130) are arranged on the inner surface of the toothed belt (130).

13. The door actuation device (100) according to any one of the preceding claims, **characterised in that** the toothed belt (130) is connected to itself to form a ring when in the mounted state.

## Revendications

1. Dispositif (100) pour l'actionnement d'une porte coulissante (1) avec un panneau de porte (2), le dispositif (100) étant destiné à être monté sur le cadre de la porte ou sur un mur (3) ou un plafond, comprenant :
un dispositif d'entraînement (110) avec une roue dentée d'entraînement (111),
une roue de renvoi (120) et
une courroie dentée (130) guidée autour de la roue dentée d'entraînement (111) et la roue de renvoi (120) dans l'état monté, la courroie dentée (130) présentant une multitude de dents orientées de préférence perpendiculairement à la direction circonférentielle, ainsi que deux extrémités (132, 133),
dans lequel le dispositif d'actionnement de porte (100) comprend en outre un dispositif d'assemblage (150) par lequel la courroie dentée (130) peut être reliée à un composant de verrouillage (200, 300) situé sur le panneau de porte (2) à une position le long de la courroie dentée (130), et
le dispositif d'assemblage (150) comporte un élément de base (160) et un élément d'assemblage (170), dans lequel
l'élément de base (160) est formé essentiellement par une plaque avec une face inférieure (161) et une face supérieure (162), dans lequel, sur la face supérieure (162), de préférence à deux extrémités opposées de l'élément de base (160), il est prévu deux surfaces d'appui (163, 164) pour l'appui des deux extrémités (132, 133) de la courroie dentée (130), dans lequel chaque surface d'appui (163, 164) est prévue respectivement pour recevoir le côté de la courroie dentée (130) opposé au côté pourvu de dents, et
l'élément d'assemblage (170) est formé essentiellement par une plaque avec une face inférieure (171) et une face supérieure (172), dans lequel des dents (173) conçues pour s'engager avec des dents complémentaires (131) des deux extrémités (132, 133) de la courroie dentée (130) sont formées sur la face inférieure (171),
**caractérisé en ce que** le dispositif d'assemblage (150) comporte en outre un élément d'adaptateur (180) formé essentiellement par une plaque, sur la face supérieure (182) de laquelle sont formées des dents (183), lesquelles sont destinées à s'engager avec les dents (173) de l'élément d'assemblage (170), et **en ce que** l'élément de base (160) présente une surface d'adaptateur (165) destinée à recevoir l'élément d'adaptateur (180), sur la face supérieure (162) entre les deux surfaces d'appui (163, 164).

2. Dispositif d'actionnement de porte (100) selon la revendication 1, **caractérisé en ce que** dans l'état assemblé, les dents (173) de l'élément d'assemblage (170) appuient sur les dents complémentaires (131) des deux extrémités (132, 133) de la courroie dentée (130) et sur les dents (183) de l'élément d'adaptateur (180), créant ainsi un assemblage fixe des deux extrémités (132, 133) de la courroie dentée (130).

3. Dispositif d'actionnement de porte (100) selon la revendication 1 ou 2, **caractérisé en ce que** le dispositif d'actionnement de porte (100) comporte en outre un recouvrement (190) permettant d'exercer une force de pression sur la face supérieure (172) de l'élément d'assemblage (170) et de relier l'élément d'assemblage (170), l'élément d'adaptateur (180) et l'élément de base (160) fixement entre eux.

4. Dispositif d'actionnement de porte (100) selon l'une des revendications 1 à 3, **caractérisé en ce que** l'élément d'assemblage (170) présente une longueur (174) plus longue que la longueur (184) de l'élément d'adaptateur (180), de préférence au moins trois fois plus longue.

5. Dispositif d'actionnement de porte (100) selon l'une des revendications 1 à 4, **caractérisé en ce que** l'élément d'adaptateur (180) présente une longueur (184) permettant d'inclure au moins cinq dents, de préférence au moins dix dents.

6. Dispositif d'actionnement de porte (100) selon l'une des revendications 1 à 5, **caractérisé en ce que** les surfaces d'appui (163, 164) de l'élément de base (160) sont approximativement aussi longues que l'élément d'adaptateur (180).

7. Dispositif d'actionnement de porte (100) selon l'une des revendications 1 à 6, **caractérisé en ce que** l'élément d'assemblage (170), l'élément d'adaptateur (180) et l'élément de base (160) présentent respectivement la même largeur, et de préférence la même largeur que la courroie dentée (130).

8. Dispositif d'actionnement de porte (100) selon l'une des revendications précédentes, **caractérisé en ce que** le dispositif d'assemblage (150) peut être, relié de préférence de façon articulée, au composant de verrouillage (200, 300) situé sur le panneau de porte (2), par le biais d'une barre d'assemblage (140), et la barre d'assemblage (140) présente de préférence une longueur d'au moins 20 cm.

9. Dispositif d'actionnement de porte (100) selon la revendication 8, **caractérisé en ce que** le composant de verrouillage (200, 300) comporte un moyen de déverrouillage de secours (210, 310) susceptible d'être libéré par un boulon de verrouillage libérable (211, 311) de l'assemblage entre la barre d'assemblage (140) et le composant de verrouillage (200, 300).

10. Dispositif d'actionnement de porte (100) selon l'une des revendications 1 à 7, **caractérisé en ce que** le composant de verrouillage (200, 300) comporte un moyen de déverrouillage de secours (210, 310) susceptible d'être libéré par un boulon d'assemblage libérable de l'assemblage entre l'élément de base et le composant de verrouillage (200, 300).

11. Dispositif d'actionnement de porte (100) selon l'une des revendications précédentes, **caractérisé en ce que** l'élément de base (160) présente une longueur (166) essentiellement égale à la longueur de l'élément d'assemblage (170).

12. Dispositif d'actionnement de porte (100) selon l'une des revendications précédentes, **caractérisé en ce que** les dents (131) de la courroie dentée (130) sont disposées sur la surface supérieure intérieure de la courroie dentée (130).

13. Dispositif d'actionnement de porte (100) selon l'une des revendications précédentes, **caractérisé en ce que** la courroie dentée (130) se referme sur elle-même à la façon d'un anneau dans l'état monté.
